(19) Europäisches Patentamt
European Patent Office
Office européen des brevets

(11) **EP 2 687 869 B1**

(12) **FASCICULE DE BREVET EUROPEEN**

(45) Date de publication et mention de la délivrance du brevet:
**15.03.2017 Bulletin 2017/11**

(51) Int Cl.:
***G01S 19/25*** (2010.01)  ***G01S 19/14*** (2010.01)

(21) Numéro de dépôt: **13177222.0**

(22) Date de dépôt: **19.07.2013**

(54) **Procédé d'acquisition de signaux GNSS pour satellite et récepteur adapté pour la mise en oeuvre de ce procédé**

Erfassungsverfahren von GNSS-Signalen für Satellit, und angepasster Empfänger für die Umsetzung dieses Verfahrens

Method for acquiring GNSS signals for a satellite and receiver suitable for implementing said method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.07.2012 FR 1257018**

(43) Date de publication de la demande:
**22.01.2014 Bulletin 2014/04**

(73) Titulaire: **Centre National d'Etudes Spatiales**
**75039 Paris Cedex 01 (FR)**

(72) Inventeurs:
• **LAURICHESSE, Denis**
  **31170 TOURNEFEUILLE (FR)**
• **de LATOUR, Antoine Richard**
  **31500 TOULOUSE (FR)**
• **DANTEPAL, Joël**
  **31600 EAUNES (FR)**

(74) Mandataire: **Office Freylinger**
**P.O. Box 48**
**8001 Strassen (LU)**

(56) Documents cités:
**US-B1- 6 278 404**

• **KAHR E ET AL: "Orbit Determination for the CanX-2 Nanosatellite using Intermittent GPS Data", GNSS 2010 - PROCEEDINGS OF THE 23RD INTERNATIONAL TECHNICAL MEETING OF THE SATELLITE DIVISION OF THE INSTITUTE OF NAVIGATION (ION GNSS 2010), THE INSTITUTE OF NAVIGATION, 8551 RIXLEW LANE SUITE 360 MANASSAS, VA 20109, USA, 24 septembre 2010 (2010-09-24), pages 2117-2125, XP056000323,**
• **Lauwrence Weill ET AL: "differences between signal acquisition and tracking", INSIDEbGNSS, 28 février 2011 (2011-02-28), pages 22-26, XP055060706, Extrait de l'Internet: URL:http://www.insidegnss.com/auto/IGM_jan feb11-Solutions.pdf [extrait le 2013-04-23]**
• **ARIAN LEONARD ET AL: "Impact of GPS and GALILEO Orbital Plane Drifts on Interoperability Performance Parameters", PROCEEDINGS OF GNSS 2003, 22 avril 2003 (2003-04-22), pages 1-11, XP055061059,**

EP 2 687 869 B1

**Description**

**Domaine technique**

La présente invention concerne l'acquisition de signaux de radionavigation par satellites (ci-après « signaux GNSS ») sur un satellite orbitant autour de la terre.

**Etat de la technique**

De manière générale, les signaux GNSS émis par des satellites d'un système de positionnement par satellites (GNSS, de l'anglais : « Global Navigation Satellite System ») se présentent sous la forme d'une porteuse modulée par une forme d'onde d'étalement contenant un code numérique pseudo-aléatoire (« code d'étalement »). La modulation de la porteuse provoquant l'étalement du spectre autour de la fréquence de la porteuse, les signaux de radionavigation sont souvent appelés « en spectre étalé ». Les codes pseudo-aléatoires représentent un identificateur du signal et donc du satellite émetteur. Connus des récepteurs, ils permettent à ceux-ci un Accès Multiple à Répartition de Code (AMRC). Accessoirement, les signaux GNSS transportent des données utiles (p. ex. le message de navigation) sous forme d'une séquence numérique (à un rythme nettement moins élevé que le code pseudo-aléatoire) modulée en plus sur la porteuse.

Dans la réception de signaux GNSS, on distingue habituellement deux phases : une première phase dite « d'acquisition » et une phase suivante dite « de poursuite ». Une bonne explication des différences entre l'acquisition et la poursuite d'un signal GNSS se trouve dans l'article « Différences between Signal Acquisition and Tracking » de L. Weill et M. Petovello paru dans l'édition de janvier/février 2011 du magazine InsideGNSS.

En phase d'acquisition, le récepteur cherche à établir une synchronisation d'une réplique interne du code pseudo-aléatoire et du code pseudo-aléatoire présent sur le signal GNSS entrant. A cette fin, le récepteur doit entre autres déterminer le décalage en fréquence dû à l'effet Doppler (ci-après : « décalage Doppler ») du signal GNSS entrant. Pour un signal GNSS donné, l'espace de recherche est donc, en principe, un espace bi-dimensionnel, dans lequel le récepteur GNSS cherche les valeurs du retard de code et du décalage Doppler qui maximisent la fonction de corrélation entre le signal GNSS entrant et la réplique locale. En pratique, le signal est considéré comme acquis si la corrélation dépasse une certaine valeur seuil.

Dans le cas d'un démarrage « à froid » du récepteur, c.-à-d. lorsqu'il n'a pas d'information sur sa position, sa vitesse, le temps et la visibilité des satellites GNSS ou lorsque ces informations sont peu fiables, le récepteur doit en principe effectuer une recherche systématique pour chaque combinaison de satellite GNSS, de décalage Doppler et de retard de code. A cette fin, l'espace de recherche est subdivisé en cellules, dont chacune est donc associée à la fois à un satellite GNSS, une plage de décalages Doppler et une plage de retards de code. L'espace de recherche est balayé, cellule par cellule, jusqu'à ce qu'au moins un pic de corrélation soit détecté. Le récepteur comprend typiquement une architecture permettant de balayer plusieurs cellules en parallèle et/ou en série. La phase d'acquisition peut toutefois durer plusieurs minutes.

Ce long délai peut poser des problèmes de disponibilité dans le cas d'un récepteur GNSS embarqué sur un satellite utilisateur d'un système de positionnement par satellites (ci-après appelé aussi « satellite utilisateur »), notamment juste après le lancement en orbite de celui-ci. Le US 6,278,404 décrit un méthode de sélection de satellite pour un récepteur dans l'espace. Par ailleurs, un procédé de démarrage à chaud d'un récepteur GPS embarqué sur un satellite, basé sur une estimation de la position du satellite CanX-2 et des décalages Doppler des signaux entrants est connu de : "Orbit détermination for the CanX-2 Nanosatellite using Intermittent GPS data", GNSS 2010 - PROCEEDINGS OF THE 23RD INTERNATIONAL TECHNICAL MEETING OF THE SATELLITE DIVISION OF THE INSTITUE OF NAVIGATION (ION GNSS 2010), 8551 RIXLEW LANE SUITE 360 MANASSAS, VA 201,09, USA, 24 September 2010, pages 2117-2125, XP056000323.

**Objet de l'invention**

Un objet de la présente invention est de réduire la durée de la phase d'acquisition dans le cas d'un récepteur GNSS destiné à être embarqué sur un satellite utilisateur d'un système de positionnement et de datation par satellites.

**Description générale de l'invention**

Un premier aspect de l'invention concerne un procédé d'acquisition de signaux GNSS selon la revendication 1, destiné à être mis en oeuvre sur un satellite utilisateur d'un système de positionnement par satellites. Le procédé comprend la recherche d'au moins un parmi plusieurs signaux GNSS provenant de différents satellites GNSS, la recherche étant exécutée par cellules dans un espace de recherche, chaque cellule étant à la fois associée à un satellite GNSS, une plage de retards de code et une plage de décalages Doppler. Selon l'invention, la recherche est limitée, au moins dans une première phase de mise en oeuvre du procédé, à des cellules de l'espace de recherche dont le satellite GNSS associé et de la plage de décalages Doppler associée présentent une probabilité statistique de cooccurrence élevée en fonction du plan d'orbite du satellite utilisateur du système de positionnement par satellites.

Avantageusement, le procédé comprend en outre l'estimation d'une position et/ou de datation au moins grossière sur la base du résultat de la recherche du premier satellite ainsi que la mise à disposition de la position et/ou datation estimée pour un traitement ultérieur, p.ex. la détermination d'une position et/ou datation précise, d'autres calculs basés sur cette estimation, etc.

Les inventeurs ont le mérite d'avoir reconnu que la connaissance du plan de l'orbite du satellite utilisateur permet de réduire, de manière significative, l'espace de recherche. L'invention exploite le fait qu'il existe une relation géométrique particulière, et notamment assez simple, entre le plan d'orbite du satellite utilisateur du système de positionnement par satellites et les plans orbitaux des satellites GNSS.

Les satellites GPS, au nombre de 24 à 36, évoluent en groupes de 4 à 6 sur 6 plans orbitaux, en suivant des orbites quasi-circulaires (demi-grand axe de 26560 km). L'inclinaison des plans orbitaux s'élève à 55° et les noeuds ascendants sont espacés de 60°. Les 24 à 27 satellites de la constellation Galileo évolueront par groupes de 8 ou 9 sur trois plans orbitaux ayant une inclinaison de 56° et dont les noeuds ascendants sont espacés de 120°. Les satellites Galileo suivent aussi des orbites quasi-circulaires (demi-grand axe de 29994 km). Depuis un satellite en orbite basse ou moyenne, chaque satellite GNSS est visible plus ou moins fréquemment en fonction de son plan orbital. En outre, on peut constater que, pour un satellite utilisateur d'un récepteur GNSS, les satellites GNSS d'un même plan orbital présentent une distribution statistique du décalage Doppler essentiellement égale. Certaines valeurs de décalage Doppler sont donc statistiquement plus probables que d'autres pour tous les satellites GNSS d'un même plan orbital. Selon l'invention, la recherche d'un pic de corrélation est accélérée par une limitation (au moins passagère) de l'espace de recherche à des cellules associées à une combinaison d'un satellite GNSS et de décalage Doppler statistiquement fréquente. Si la recherche dans l'espace de recherche limité n'aboutit pas à l'identification d'un pic de corrélation, une stratégie de recherche hiérarchisée, qui comprend l'agrandissement progressif de l'espace de recherche par ordre décroissant de la probabilité des cellules, peut être adoptée.

Les probabilités de mesurer un certain décalage Doppler sur un signal en provenance d'un certain satellite GNSS (c.-à-d. les probabilités de cooccurrence) sont déterminées à l'avance sur la base de paramètres (p.ex. le noeud ascendant, le noeud descendant et/ou l'inclinaison) du plan d'orbite du satellite utilisateur et de paramètres orbitaux de la constellation GNSS. Cette détermination des probabilités de cooccurrence n'a pas besoin d'être calculée à bord du satellite utilisateur, bien que cela soit une option disponible dans le cadre de la mise en oeuvre du procédé selon l'invention. Le plan d'orbite est normalement bien connu avant le lancement du satellite utilisateur (l'orbite précise ne l'est pas). Il est donc possible de calculer les probabilités de cooccurrence à l'avance et de stocker une liste des cellules de l'espace de recherche auxquelles le récepteur embarqué doit limiter sa recherche ou un ordre selon lequel le récepteur doit balayer les cellules de l'espace de recherche. Dans ce cas, pendant l'exécution du procédé, le récepteur n'a pas besoin de déterminer les probabilités de cooccurrence lui-même. Selon un mode de réalisation possible de l'invention, les cellules de l'espace de recherche dont le satellite GNSS associé et de la plage de décalages Doppler associée présentent une probabilité de cooccurrence élevée sont obtenues, par le récepteur, d'un centre de calcul à distance, via un lien de communication.

Il est également possible pour le récepteur d'obtenir l'ensemble des probabilités de cooccurrence pour les combinaisons de satellite GNSS et de plage de décalage Doppler d'un centre de calcul à distance, via un lien de communication. Dans ce cas, le procédé exécuté par le récepteur comprend la détermination des cellules de l'espace de recherche dont le satellite GNSS associé et de la plage de décalages Doppler associée présentent une probabilité de cooccurrence élevée.

Finalement, les probabilités de cooccurrence pour des combinaisons de satellite GNSS et de plage de décalage Doppler peuvent être calculées (par le récepteur embarqué) sur la base de paramètres du plan d'orbite du satellite utilisateur du système de positionnement par satellites et de paramètres de plan d'orbite des satellites GNSS. Ensuite le récepteur détermine (sélectionne) les cellules de l'espace de recherche dont le satellite GNSS associé et de la plage de décalages Doppler associée présentent une probabilité de cooccurrence élevée.

On note que les probabilités de cooccurrence pour des combinaisons de satellite GNSS et de plage de décalage Doppler peuvent être calculées à l'aide de tableaux de correspondance et/ou d'un modèle mathématique.

Après acquisition d'un premier signal GNSS, le procédé peut comprendre l'acquisition d'autres signaux GNSS, ceci optionnellement après une limitation de la recherche à des cellules dont le satellite GNSS associé et de la plage de décalages Doppler associée présentent une probabilité de cooccurrence augmentée suite à l'acquisition du premier signal GNSS. P.ex., après avoir acquis un premier signal GNSS en provenance d'un premier satellite GNSS avec un certain décalage Doppler, le récepteur peut utiliser cette information et sa connaissance de la constellation GNSS pour déterminer quels satellites GNSS sur le même plan orbital que le premier satellite GNSS sont probablement cachés par la terre et quels sont les décalages Doppler probables des satellites GNSS restants sur ce même plan orbital. Ces informations peuvent ensuite être utilisées pour cibler la recherche d'autres signaux GNSS sur un nombre réduit de cellules de l'espace de recherche.

Alternativement ou additionnellement, après acquisition d'un premier signal GNSS, une estimation d'une position et/ou de datation grossière peut être réalisée sur la base du premier signal GNSS et du plan d'orbite du satellite utilisateur. Cette estimation grossière peut ensuite être utilisée pour rechercher d'autres signaux GNSS de manière ciblée.

Un autre aspect de l'invention concerne un récepteur GNSS pour un satellite utilisateur d'un système de positionnement par satellites, configuré (p.ex. programmé) de sorte à mettre en oeuvre un procédé d'acquisition de signaux GNSS à froid tel que décrit auparavant.

Encore un autre aspect de l'invention concerne un programme informatique pour un récepteur GNSS destiné à être embarqué sur un satellite utilisateur d'un système de positionnement par satellites, comprenant des instructions exécutables par le récepteur GNSS, qui entraînent, lorsqu'elles sont exécutées par le récepteur GNSS, la mise en oeuvre d'un procédé d'acquisition de signaux GNSS à froid tel que décrit auparavant.

**Brève description des dessins**

D'autres particularités et caractéristiques de l'invention ressortiront de la description détaillée de quelques modes de réalisation avantageux présentés ci-dessous, à titre d'illustration, avec référence aux dessins annexés. Ceux-ci montrent:

Fig. 1 : une illustration des paramètres caractérisant le plan orbital d'un satellite ;

Fig. 2 : un diagramme représentant la distribution des décalages Doppler des signaux GNSS provenant des différents satellites Galileo, reçus sur un satellite utilisateur en orbite basse ;

Fig. 3 : une illustration schématique de l'espace de recherche à balayer par un récepteur GNSS conventionnel ;

Fig. 4 : un ordinogramme d'un premier mode d'exécution d'un procédé selon l'invention ;

Fig. 5 : une illustration de la sélection de plages de décalage Doppler et des satellites GNSS correspondants ;

Fig. 6 : une illustration schématique de l'espace de recherche restreint par rapport à l'espace de recherche de base montré sur la figure 3 ;

Fig.7: un diagramme indiquant le nombre de satellites Galileo visibles simultanément dans le cas de la restriction de l'espace de recherche montrée sur la figure 5 ;

Fig. 8 : un ordinogramme d'un deuxième mode d'exécution d'un procédé selon l'invention ;

Fig. 9 : un ordinogramme d'un troisième mode d'exécution d'un procédé selon l'invention ;

Fig. 10 : un graphique des résidus en fonction de la position sur l'orbite obtenus sur la base de mesures de pseudo-distance réelles pour un satellite polaire à 500 km d'altitude.

**Description d'exécutions préférées non limitatives de l'invention**

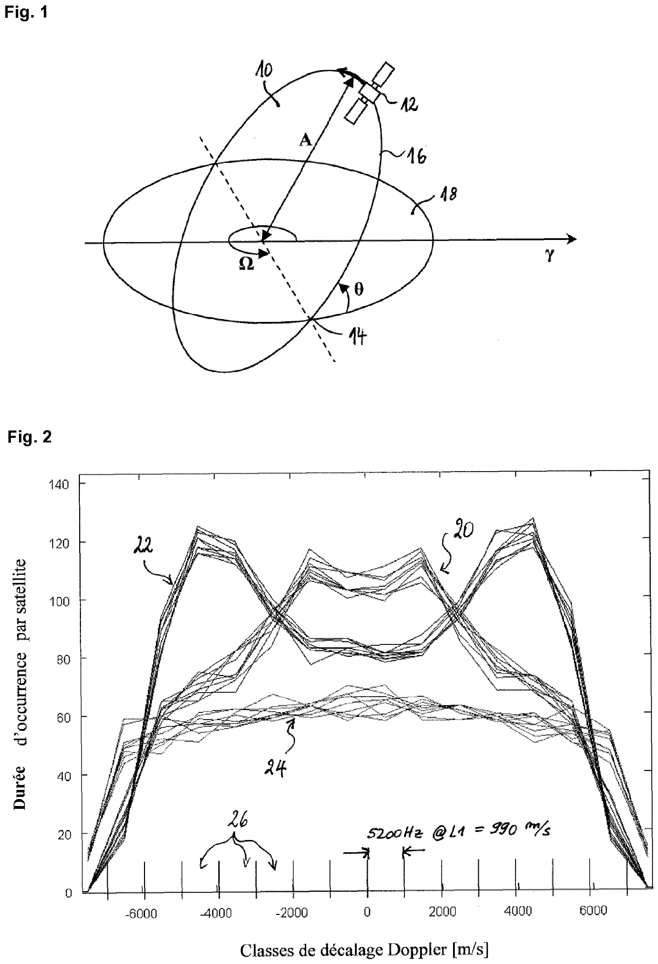

Les paramètres caractérisant le plan orbital 10 d'un satellite 12 sont illustrés à la figure 1. Le noeud ascendant 14 est défini comme le point d'intersection entre la trajectoire 16 du satellite 12 et un plan de référence (le plan de l'équateur 18) lorsque le satellite 12 se déplace vers le nord. La longitude du noeud ascendant (aussi appelée ascension droite du noeud ascendant ou RAAN, de l'anglais « Right Ascension of the Ascending Node ») désigne l'angle, noté $\Omega$, entre la direction du point vernal $\gamma$ et le noeud ascendant mesuré vers l'Est dans le plan de l'équateur. Le deuxième paramètre définissant le plan orbital 10 est son inclinaison (ici notée $\theta$) par rapport au plan équatorial 18. La figure 1 montre en outre le demi-grand axe A de l'orbite du satellite 12.

Les paramètres du plan orbital d'un satellite sont normalement connus avec une bonne précision à l'avance du lancement. Le demi-grand axe est connu à quelques dizaines de kilomètres près. Avec les paramètres du plan orbital et une estimation de l'altitude (ou du demi-grand axe) du satellite, il est possible de calculer d'avance la distribution statistique des décalages Doppler pour les signaux GNSS émis par un satellite GNSS et reçus sur le satellite utilisateur.

Selon l'invention, les combinaisons de décalage Doppler et de satellite GNSS les plus probables sont utilisées pour y cibler la recherche de pics de corrélation exécutée pendant l'acquisition de signaux GNSS.

La figure 2 montre une simulation de la distribution des décalages Doppler des signaux GNSS provenant des différents satellites Galileo, reçus sur un satellite utilisateur en orbite basse. Les 27 satellites Galileo évolueront par groupes de 9 sur trois plans orbitaux inclinés de 56°, dont les noeuds ascendants sont espacés de 120°. La simulation est basé sur les paramètres d'orbite d'un satellite Globalstar en tant que satellite utilisateur : $\Omega$ = 72,6°, $\theta$ = 52°, A = 7792 km. Les paramètres du récepteur Galileo ont été choisis comme suit :

∘ Nombre de corrélateurs en parallèle : 180,

∘ Temps d'intégration cohérente : 1 ms, ce qui résulte en des plages de décalage Doppler d'une largeur à chaque fois de 520 Hz,

∘ Temps d'intégration non cohérente : 4 ms.

Comme longitude des noeuds ascendants de la constellation Galileo, on a assumé les valeurs nominales de 0°, 120° et 240°, respectivement.

La figure 2 montre qu'il y a une distribution de décalages Doppler caractéristique commune à tous les satellites GNSS d'un même plan orbital de la constellation Galileo. Dans l'histogramme, la largeur des classes de décalage Doppler 26 s'élève à 5200 Hz (écart par rapport à la fréquence E1 = 1575,42 MHz), ce qui correspond à une vitesse différentielle entre l'émetteur et le récepteur de 990 m/s. L'axe des ordonnées indique la durée d'occurrence en minutes de chaque classe de décalage Doppler pendant la durée de simulation (ici quelques jours). On remarque que

∘ la fréquence statistique du décalage Doppler des satellites GNSS comprenant le noeud ascendant de 0° (famille de courbes 20) culmine autour de -1500 Hz et +1500 Hz,

∘ la fréquence statistique du décalage Doppler des satellites GNSS comprenant le noeud ascendant de 120° (famille de courbes 22) culmine autour de -4500 Hz et +4500 Hz, et

∘ la fréquence statistique du décalage Doppler des satellites GNSS comprenant le noeud ascendant de 240° (famille de courbes 24) n'a pas de maximum bien prononcé.

L'invention exploite le fait que certaines combinaisons d'à chaque fois une valeur de décalage Doppler et d'un satellite GNSS sont plus probables que d'autres.

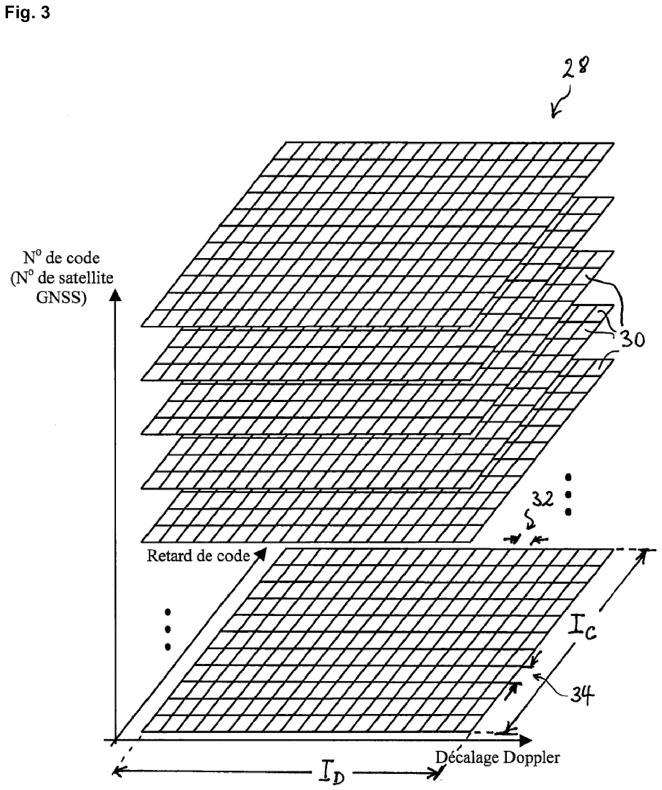

La figure 3 montre graphiquement l'espace de recherche 28 de signaux GNSS devant être balayé pendant un procédé d'acquisition selon l'état de la technique. L'espace de recherche 28 peut être considéré comme le produit cartésien de l'intervalle d'incertitude $I_D$ du décalage Doppler, de l'intervalle d'incertitude $I_C$ du retard de code et de l'ensemble (fini) des satellites GNSS. Cet espace de recherche 28 est discrétisé par subdivision en cellules 30, dont chacune correspond à une plage de décalage Doppler 32, à une plage de retards de code 34 et un satellite GNSS. La taille de la plage de décalage Doppler 32 associée à chaque cellule 30 dépend du temps d'intégration cohérente du récepteur GNSS. Dans le cas du récepteur Galileo ayant les spécifications ci-dessus, chaque plage de décalage Doppler 32 mesure 520 Hz en largeur. Le nombre de plages de décalage Doppler 32 et donc la taille de l'intervalle d'incertitude $I_D$ du décalage Doppler dépend de la vitesse relative maximale entre l'émetteur et le récepteur GNSS. La taille de chaque plage de retard de code 34 associée à chaque cellule correspond typiquement à la moitié d'une bribe de code (en anglais : « code chip »). L'incertitude $I_C$ du retard de code correspond à la période du code-pseudo-aléatoire du signal GNSS (c.-à-d. p.ex. 1 ms pour le code du signal C/A de GPS et 4 ms pour le code du signal E1B de Galileo) ou à l'incertitude sur la synchronisation temporelle du récepteur.

Sur la figure 2, chaque classe de décalages Doppler 26 correspond à 10 fois la largeur d'une cellule 30 de l'espace de recherche sur l'axe du Doppler. Pour un récepteur ayant les spécifications ci-dessus, une recherche de retard de code pour un signal GNSS et un décalage Doppler donnés (longueur de code supposée : 4092 bribes) durera : 4092 x 2 x 4 ms/(180) = 0,18 s. Si l'incertitude du décalage Doppler s'élève à entre -7000 m/s et +7000 m/s (soit entre -37000 Hz et +37000 Hz à la fréquence E1), comme illustré à la figure 2, environ 140 hypothèses de décalage Doppler doivent être testées pour un signal GNSS, dans le pire des cas (absence de signal). Avec 27 satellites GNSS différents dans le cas de Galileo, un procédé d'acquisition conventionnel après un démarrage à froid peut durer plusieurs minutes.

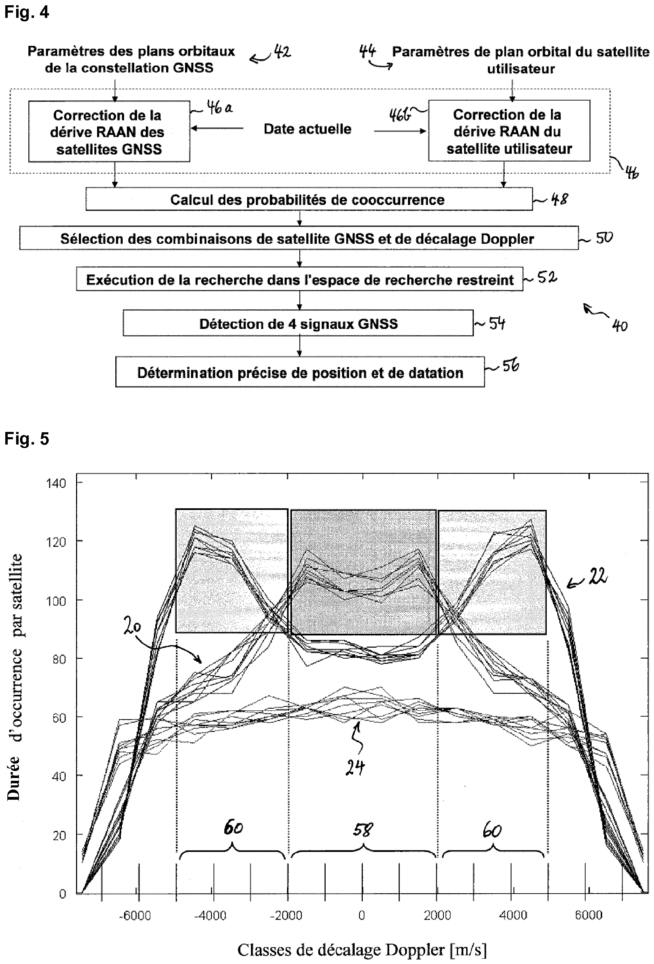

La figure 4 montre un ordinogramme 40 d'un procédé d'acquisition de signaux GNSS selon un premier mode de réalisation préféré de l'invention. Le procédé comprend le calcul de la fréquence statistique de chaque plage de valeurs de décalage Doppler pour chaque satellite GNSS (étape 48). Ce calcul des probabilités de cooccurrence 48 est basé sur les paramètres des plans orbitaux de la constellation GNSS 42 et les paramètres du plan orbital du satellite utilisateur (sur lequel le récepteur GNSS est embarqué ou doit être embarqué) 44 valables à l'instant prévu de l'acquisition.

La distribution des décalages Doppler est due à la position de l'orbite du satellite utilisateur par rapport aux orbites des satellites GNSS, c.-à-d. des satellites Galileo dans cet exemple. Cette position relative peut varier en fonction du temps, mais cette variation est très lente. Si l'instant auquel l'acquisition des signaux GNSS doit être exécutée est grossièrement connu (p.ex. à un jour près) on peut négliger la dérive de la position relative. Si les paramètres relatifs aux plans d'orbite des satellites 42 sont connus pour une autre date que celle visée pour l'acquisition des signaux GNSS, il convient de les corriger en utilisant la date actuelle (étape 46a). Notamment l'ascension droite du noeud ascendant (RAAN) d'un satellite est normalement indiquée avec sa valeur initiale (c.-à-d. celle valable à la date du lancement du satellite en orbite). Or, l'ascension droite du noeud ascendant n'est pas constante mais sujette à une dérive essentiellement constante dans le temps. P.ex., les noeuds ascendants de la constellation Galileo subiront une dérive de 9,01° par an (voir p.ex. l'article « Impact of GPS and Galileo Orbital Plane Drifts on Interoperability Performance Parameters » d'Arien Leonard et autres, paru dans Proceedings of GNSS 2003). Il s'ensuit que la distribution des probabilités de cooccurrence est calculée soit en utilisant les paramètres des plans orbitaux valables à la date de l'acquisition, soit en utilisant des paramètres des plans orbitaux anciens en appliquant une correction. La même remarque est valable pour une éventuelle correction des paramètres du plan orbital du satellite utilisateur (étape 46b).

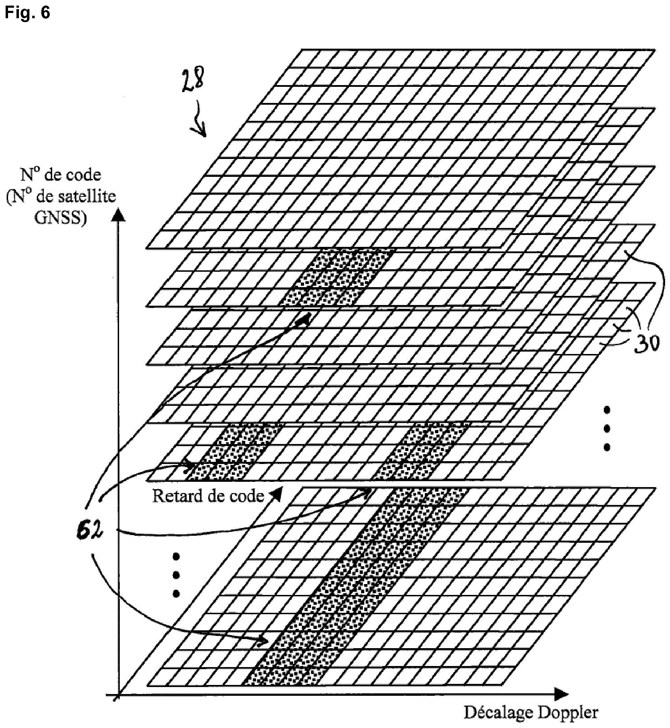

Dès que les probabilités de cooccurrence sont connues, les combinaisons d'un satellite GNSS et d'un décalage Doppler les plus probables sont sélectionnées (étape 50). Dans l'exemple de la figure 5, on sélectionnerait pour les satellites GNSS du plan orbital ayant RAAN = 0° les plages de décalage Doppler entre -2000 m/s et +2000 m/s (identifiés par le numéro de référence 58) et pour les satellites GNSS du plan orbital ayant RAAN = 120° les plages de décalage Doppler entre -5000 m/s et -2000 m/s ainsi qu'entre +2000 m/s et +5000 m/s (identifiés par le numéro de référence 60). Aucune plage de décalage Doppler n'est sélectionnée pour les satellites du plan orbital ayant RAAN = 240° (famille de courbes 24). La recherche de pics de corrélation est donc limitée aux cellules de l'espace de recherche associées à la fois à un satellite du plan orbital ayant RAAN = 0° et à un décalage Doppler entre -2000 m/s et +2000 m/s et aux cellules de l'espace de recherche associées à la fois à un satellite du plan orbital ayant RAAN = 120° et à un décalage Doppler entre -5000 m/s et -2000 m/s ou entre +2000 m/s et +5000 m/s. Au lieu de balayer l'espace de recherche de base 28 contenant environ 27 x 140 = 3780 cellules dans cet exemple, le récepteur appliquant le procédé selon l'invention ne balaye que l'espace de recherche restreint aux cellules, dont le satellite GNSS associé et de la plage de décalages Doppler associée présentent une probabilité statistique de cooccurrence élevée. Sur la figure 6, l'espace de recherche restreint 62 est relevé en pointillé de l'espace de recherche de base 26. Cet espace de recherche restreint contient dans le cas de l'exemple de la figure 5 seulement 900 cellules, soit environ un quart de l'espace de recherche de base. En outre, la densité statistique des signaux GNSS dans l'espace de recherche restreint 62 est plus élevée que dans l'espace de recherche de base 26. La valeur escomptée du temps d'acquisition d'un premier signal GNSS est donc nettement réduite par rapport à une stratégie de recherche conventionnelle. Des estimations réalisées par les inventeurs suggèrent que la réduction puisse être, en moyenne, d'un facteur 10.

Selon le procédé illustré à la figure 4, le récepteur exécute la recherche dans l'espace de recherche restreint 62 (étape 52) et essaie d'y détecter quatre signaux GNSS (étape 54). Ensuite, la position du satellite utilisateur et la date sont déterminées (étape 56).

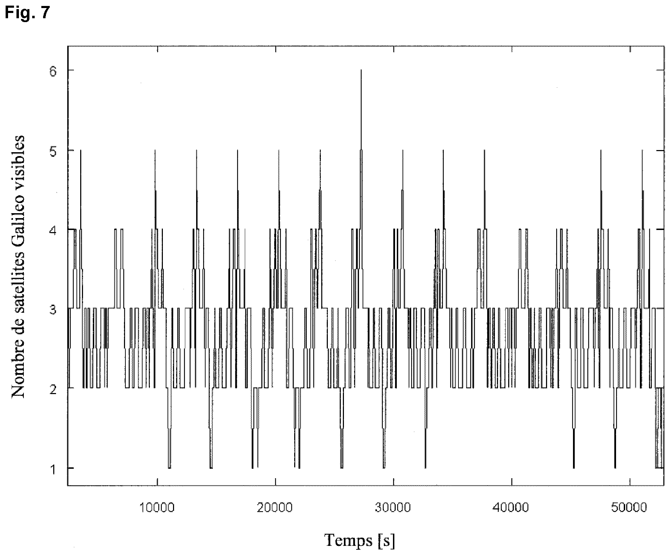

La figure 7 montre le nombre de satellites Galileo visibles simultanément si l'espace de recherche est restreint de la manière montrée à la figure 5. On note qu'à tout moment, au moins un satellite Galileo est visible. Si l'espace de recherche est limité comme le montre la figure 5, on est sûr de pouvoir y détecter au moins un signal GNSS instantanément. Le critère d'avoir au moins un signal GNSS dans l'espace de recherche restreint est d'ailleurs de préférence appliqué pour la sélection des cellules de l'espace de recherche restreint (étape 50 dans le procédé de la figure 4).

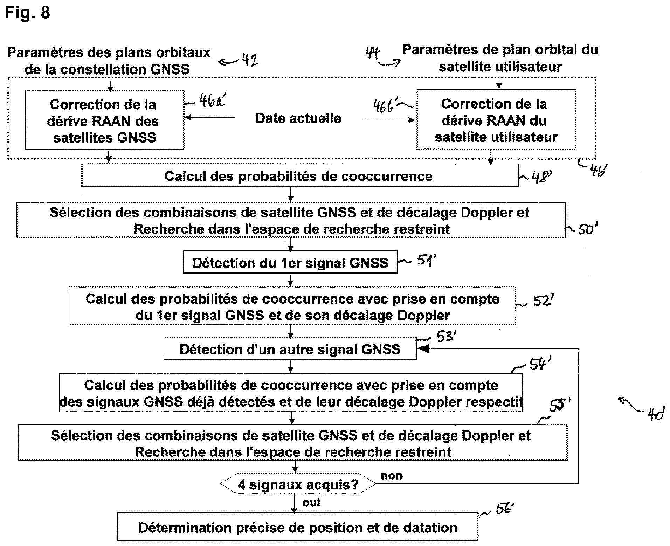

La figure 8 montre un ordinogramme 40' d'un procédé d'acquisition de signaux GNSS selon un deuxième mode de réalisation préféré de l'invention. Le procédé de la figure 8 est une variante perfectionnée du procédé de la figure 4 dans le sens que l'espace de recherche restreint peut être modifié pendant l'exécution du procédé pour réduire le temps de détection de $2^{\text{ème}}$, $3^{\text{ème}}$ et $4^{\text{ème}}$ signaux GNSS. Les étapes 46'-48' du procédé de la figure 8 sont identiques aux étapes 46-48 du procédé de la figure 4. Avant la détection (l'acquisition) d'un premier signal GNSS, l'espace de recherche est restreint de la même manière que dans le procédé de la figure 4. La recherche d'un premier signal GNSS est aussi exécutée de la même façon que dans l'exemple précédent (étape 50'). Après la détection d'un premier signal GNSS (étape 51'), les probabilités de cooccurrence sont recalculées (étape 52') en prenant en compte l'information que le premier signal GNSS a été détecté avec un certain décalage Doppler. Vu que la constellation GNSS (la répartition des satellites GNSS sur les différents plans orbitaux ainsi que leur ordre dans sur les orbites) est connue, cette information implique que certains satellites GNSS sont actuellement invisibles (ils sont donc écartés de l'espace de recherche) et permet en outre de réduire la recherche d'autres signaux à des plages de décalage Doppler plus spécifiques (étape 54'). Ensuite, le récepteur sélectionne (étape 55') parmi les cellules de l'espace de recherche celles qui ont une probabilité statistique de cooccurrence élevée au vu de toutes les informations disponibles jusqu'à ce moment et exécute les opérations de corrélation. Après détection d'un deuxième signal GNSS, les étapes 53' à 55' sont répétées. Dès que quatre signaux GNSS ont été acquis, le récepteur détermine la position et la date de manière précise (étape 56').

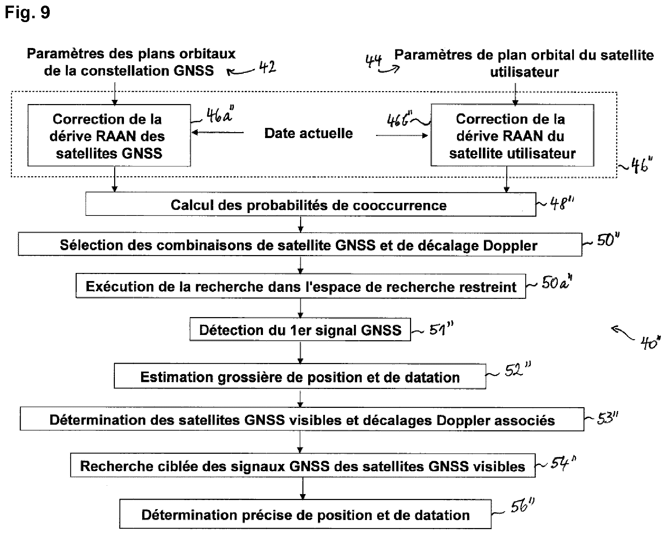

La figure 9 montre un ordinogramme 40" d'un procédé d'acquisition de signaux GNSS selon un troisième mode de réalisation préféré de l'invention. Les étapes 46" à 51" du procédé de la figure 9 sont identiques aux étapes 46' à 51' du procédé de la figure 8. Après la détection (l'acquisition) d'un premier signal GNSS (étape 51 "), le récepteur effectue une estimation grossière de position et de date (étape 52") en utilisant la pseudo-distance résultant du premier signal GNSS acquis et des équations de contrainte décrivant les paramètres (supposés) connus des orbites des satellites GNSS et du satellite utilisateur.

Dans la suite une variante possible pour la mise en oeuvre de l'étape 52 est décrite en détail. On se place en repère inertiel et on note $\vec{P}_e, \vec{V}_e, \vec{\gamma}_e$ les vecteurs position, vitesse et accélération du satellite GNSS émetteur du premier signal GNSS acquis, et $\vec{P}, \vec{V}, \vec{\gamma}$ les vecteurs position, vitesse et accélération du satellite utilisateur.

Le récepteur embarqué sur le satellite utilisateur ayant acquis le premier signal GNSS, il dispose d'une première pseudo-distance, notée Pd. En surveillant l'évolution de la pseudo-distance, le récepteur peut déduire la pseudo-vitesse (dérivée par rapport au temps de la pseudo-distance), notée Pv, et la pseudo-accélération (dérivée par rapport au temps de la pseudo-vitesse), notée Pa. On a les équations suivantes (observables à gauche, inconnues du modèle à droite) :

$Pd = \rho + b$ (Eq. 1), où $\rho$ désigne la distance de propagation géométrique ( $\rho = \|\vec{r}\|$, avec $\vec{r} = \vec{P} - \vec{P}_e$ ) et b le biais d'horloge du récepteur embarqué ;

$$Pv = \rho' + \frac{\Delta f}{f}$$ (Eq. 2) où $\rho'$ désigne la dérivée par rapport au temps de $\rho$ et $\frac{\Delta f}{f}$ le biais de fréquence de l'horloge du récepteur embarqué ; et

$$Pa = \rho'' + \left(\frac{\Delta f}{f}\right)'$$ (Eq. 3) où $\rho''$ désigne la dérivée seconde par rapport au temps de $\rho$ et $\left(\frac{\Delta f}{f}\right)'$ la dérive de fréquence de l'horloge du récepteur embarqué.

Du fait que $\rho^2 = \vec{r}.\vec{r}$ et donc $\rho\rho' = \vec{r}.\vec{r}'$, avec $\vec{r}' = \vec{V} - \vec{V}_e$, on déduit: $\rho' = \vec{u}.\vec{r}'$, avec $\vec{u} = \dfrac{\vec{P} - \vec{P}_e}{\|\vec{P} - \vec{P}_e\|}$.

La dérivée seconde de la distance de propagation s'écrit : $\rho\rho'' + \rho'^2 = \vec{r}.\vec{r}'' + \vec{r}'^2$ avec $\vec{r}'' = \vec{\gamma} - \vec{\gamma}_e$. Il s'ensuit la relation: $\rho'' = \dfrac{\vec{r}.\vec{r}'' + \vec{r}'^2 - \rho'^2}{\rho} = \dfrac{1}{\|\vec{r}\|}\left[\vec{r}.\vec{r}'' + \vec{r}'^2 - (\vec{u}.\vec{r}')^2\right]$. En outre, par application de la troisième loi de Kepler, on a: $\vec{r}'' = -\mu\left(\dfrac{\vec{P}}{\|\vec{P}\|^3} - \dfrac{\vec{P}_e}{\|\vec{P}_e\|^3}\right)$, où $\mu = 3,98600436 \times 10^{14}$ m$^3$/s$^2$.

Pour résoudre le système des équations Eq. 1-3, il faut réduire le nombre d'inconnues à 3. On note que les positions du satellite émetteur peuvent être extraites du message de navigation. On peut facilement calculer les vitesses et accélérations du satellite émetteur soit en dérivant les formules permettant de retrouver les positions, soit par différences finies. Si on admet que l'orbite du satellite utilisateur est circulaire, le plan orbital étant connu, les variables inconnues caractérisant l'orbite sont réduites à 2. En effet, le plan étant connu, il ne reste à trouver que le demi-grand axe et la position sur l'orbite. Comme le biais d'horloge b, le biais de fréquence de l'horloge $\frac{\Delta f}{f}$ et la dérive de fréquence de l'horloge $\left(\frac{\Delta f}{f}\right)'$ du récepteur embarqué sont aussi inconnus à priori, on suppose que le biais de fréquence et la dérive de fréquence sont nuls. Le biais de fréquence va directement se traduire en erreur sur la pseudo-vitesse (maximum 100 m/s, compte tenu de la technologie des horloges des récepteurs embarqués) et sur la position (en raison de la 3$^{\text{ème}}$ loi de Kepler, maximum 100 km). L'erreur résultante est considérée acceptable pour l'estimation grossière.

Le système d'équations est résolu comme suit dans le cadre de l'estimation grossière de la position du satellite utilisateur. On remarque que le biais d'horloge b se reporte directement sur la mesure de pseudo-distance. Cette mesure ne sera donc d'aucune utilité pour résoudre la position et la vitesse du satellite. Le système se réduit donc à :

- 2 mesures : $\tilde{P}v$ et $\tilde{P}a$ (les mesures modélisées correspondantes sont notées Pv et *Pa*)
- 2 inconnues : a (demi-grand axe) et $\alpha$ (position sur l'orbite ou anomalie)

Le principe de résolution consiste à regarder l'allure de la courbe des résidus de mesure, pour les différentes valeurs possibles de a et $\alpha$. Pour tous les couples de positions possibles (a, $\alpha$), on calcule un résidu composite comme suit :

$$résidu = \sqrt{\left(\frac{\tilde{P}v - Pv}{1000}\right)^2 + \left(\tilde{P}a - Pa\right)^2}\ ,$$

où le facteur 1000 est un coefficient de normalisation entre les vitesses et les accélérations (qui est donné en secondes et qui correspond à l'inverse du moyen mouvement de l'orbite basse $n = 2\pi/T \approx 0{,}001s^{-1}$). Ce résidu est homogène à une accélération.

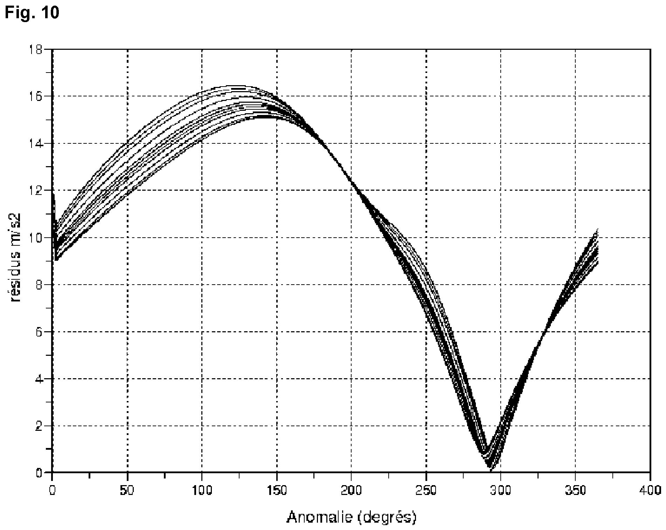

La figure 10 montre les résidus en fonction de la position sur l'orbite obtenus sur la base de mesures de pseudo-distance réelles pour un satellite polaire à 500 km d'altitude. Les mesures de pseudo-vitesse et pseudo-accélération sont obtenues par différences finies d'ordre 1 et 2 des mesures de pseudo-distance. On parcourt les demi-grand axes entre 6400 et 8000 km et les positions sur l'orbite entre 0 et $2\pi$, avec une discrétisation de 100 km. Cette étape revient à parcourir l'espace de toutes les solutions possibles afin de trouver un jeu de paramètres qui minimise le résidu. Chaque tracé de la figure 10 représente une altitude différente. On remarque la très faible sensibilité de la solution à l'altitude. Le minimum est bien marqué pour une altitude et une anomalie (position sur l'orbite) ; celles-ci représentent donc la solution du problème. Des essais dans d'autres configurations de plans ont montré des résultats identiques. Les précisions en position et vitesse sont d'environ 50 km et 50 m/s, elles sont directement liées à la valeur de la dérive d'horloge. Pour une résolution rapide, on peut choisir un demi-grand axe initial, en déduire une anomalie initiale, et itérer par une méthode de gradient.

En résumé, on cherche à trouver le couple (altitude, anomalie) solution du problème. Avec les hypothèses prises, ce couple de valeurs donne la position grossière du récepteur. Pour la résolution, on se sert des mesures issues du récepteur et d'une modélisation des positions, vitesses, accélérations. A partir de ces quantités, on peut définir un système de deux équations et deux inconnues. Le système d'équations est non-linéaire mais le jeu de courbes paramétriques permet de se rendre compte que le minimum est unique et qu'il est peu dépendant de l'altitude, ce qui donne une indication pour résoudre le système. On peut utiliser la méthode du gradient, avec comme conditions initiales un demi-grand axe moyen et l'anomalie correspondante sur la courbe (l'anomalie correspondant au minimum de résidu pour ce demi-grand axe).

Dès que la position du satellite utilisateur est grossièrement connue (à environ 100 km près), le récepteur embarqué peut déduire, de manière approximative, quels satellites GNSS sont visibles (on peut supposer que les données almanach de la constellation GNSS sont stockées à priori dans le récepteur embarqué) et quel est le décalage Doppler des signaux qu'ils émettent (étape 53" à la figure 9). Ensuite, le récepteur recherche les signaux GNSS correspondants de manière ciblée (étape 54"), jusqu'à ce qu'au moins quatre signaux GNSS soient acquis et la détermination précise de la position et de la date soit possible (étape 56").

Comme indiqué dans la description générale, il est possible de calculer les probabilités de cooccurrence un certain temps à l'avance. Connaissant l'instant approximatif de la mise en oeuvre du procédé d'acquisition, les paramètres des plans orbitaux de la constellation GNSS 42 et les paramètres du plan orbital du satellite utilisateur 44, il est possible de faire calculer les probabilités de cooccurrence par un centre de calcul. Le même centre de calcul pourrait déjà sélectionner les cellules de l'espace de recherche auxquelles la recherche est à limiter et/ou quelles cellules sont à favoriser par le récepteur embarqué. L'espace de recherche restreint ou favorable peut dès lors être stocké dans une mémoire du récepteur embarqué (p.ex. avant le lancement du satellite utilisateur) ou lui être communiqué en vol. Selon cette option, les étapes 46 et 48, 46' et 48', 46" et 48" des variantes de procédé décrites ne seraient pas mises en oeuvre par le récepteur embarqué. Uniquement les résultats de ces étapes seraient utilisés par le récepteur embarqué.

**Revendications**

1. Procédé d'acquisition de signaux GNSS, destiné pour être mis en oeuvre sur un satellite utilisateur d'un système de positionnement par satellites, comprenant la recherche d'au moins un parmi plusieurs signaux GNSS provenant de différents satellites GNSS, ladite recherche étant exécutée par cellules dans un espace de recherche, chaque cellule étant à la fois associée à un satellite GNSS, une plage de retards de code et une plage de décalages Doppler ; et dans lequel ladite recherche est limitée, au moins dans une première phase de mise en oeuvre du procédé, à des cellules de l'espace de recherche associées à une combinaison d'un satellite GNSS et d'une plage de décalages Doppler statistiquement fréquente en fonction du plan d'orbite du satellite utilisateur du système de positionnement par satellites ;

le procédé est **caractérisé en ce qu'**il comprend le calcul a priori des fréquences statistiques pour des combinaisons de satellite GNSS et de plage de décalage Doppler, sur la base de paramètres du plan d'orbite du satellite utilisateur du système de positionnement par satellites et de paramètres de plan d'orbite des satellites GNSS, et comprend la détermination des cellules de l'espace de recherche associées à une combinaison statistiquement fréquente d'un satellite GNSS et d'une plage de décalages Doppler.

2. Procédé selon la revendication 1, comprenant en outre l'estimation d'une position et/ou de datation au moins grossière sur la base d'un résultat de ladite recherche ainsi que la mise à disposition de la position et/ou datation estimée pour un traitement ultérieur.

3. Procédé selon la revendication 1 ou 2, dans lequel les cellules de l'espace de recherche associées à une combinaison statistiquement fréquente d'un satellite GNSS d'une plage de décalages Doppler sont obtenues d'un centre de calcul à distance, via un lien de communication.

4. Procédé selon la revendication 1 ou 2, dans lequel des fréquences statistiques pour des combinaisons de satellite GNSS et de plage de décalage Doppler sont obtenues d'un centre de calcul à distance, via un lien de communication.

5. Procédé selon la revendication 1, dans lequel les fréquences statistiques pour des combinaisons de satellite GNSS et de plage de décalage Doppler sont calculées à l'aide de tableaux de correspondance et/ou d'un modèle mathématique.

6. Procédé selon l'une quelconque des revendications 1 à 5, dans lequel, après acquisition d'un premier signal GNSS, d'autres signaux GNSS sont acquis, ceci optionnellement après une limitation de la recherche à des cellules associées à une combinaison d'un satellite GNSS et d'une plage de décalages Doppler présentant une probabilité statistique augmentée suite à l'acquisition dudit premier signal GNSS.

7. Procédé selon l'une quelconque des revendications 1 à 5, dans lequel, après acquisition d'un premier signal GNSS, une estimation d'une position et/ou de datation grossière est réalisée sur la base dudit premier signal GNSS et du plan d'orbite du satellite utilisateur du système de positionnement par satellites, et dans lequel cette estimation grossière est utilisée pour rechercher d'autres signaux GNSS de manière ciblée.

8. Récepteur GNSS pour un satellite utilisateur d'un système de positionnement par satellites, configuré pour mettre en oeuvre un procédé d'acquisition de signaux GNSS selon l'une quelconque des revendications 1 à 7.

9. Programme informatique pour un récepteur GNSS destiné à être embarqué sur un satellite utilisateur d'un système de positionnement par satellites, comprenant des instructions exécutables par le récepteur GNSS, lesdites instructions entraînant, lorsqu'elles sont exécutées par le récepteur, la mise en oeuvre d'un procédé d'acquisition de signaux GNSS selon l'une quelconque des revendications 1 à 7.

**Patentansprüche**

1. Verfahren zur Erfassung von GNSS-Signalen, welches Verfahren zur Ausführung auf einem Satelliten, der ein Satellitenpositionsbestimmungssystem benutzt, bestimmt ist, umfassend die Suche nach mindestens einem von mehreren GNSS-Signalen aus verschiedenen GNSS-Satelliten, wobei die Suche in einem Suchraum zellenweise erfolgt, wobei jede Zelle sowohl einem GNSS-Satelliten als auch einem Codeverzögerungsbereich sowie einem Doppler-Verschiebungsbereich zugeordnet ist;

und bei dem die Suche zumindest in einer ersten Durchführungsphase des Verfahrens auf Zellen des Suchraums beschränkt ist, die einer statistisch häufigen Kombination aus einem GNSS-Satelliten und einem Doppler-Verschiebungsbereich in Abhängigkeit von der Bahnebene des Satelliten des Satellitenpositionsbestimmungssystems zugeordnet sind; welches Verfahren **dadurch gekennzeichnet ist, dass** es umfasst:

die apriorische Berechnung der statistischen Häufigkeiten für Kombinationen aus GNSS-Satellit und Doppler-Verschiebungsbereich auf der Grundlage von Bahnebene-Parametern des Satelliten, der das Satellitenpositionsbestimmungssystem benutzt, und Bahnebene-Parametern der GNSS-Satelliten und

die Bestimmung der Zellen des Suchraums, die einer statistisch häufigen Kombination aus einem GNSS-Satelliten und einem Doppler-Verschiebungsbereich zugeordnet sind.

2. Verfahren nach Anspruch 1, ferner umfassend die zumindest grobe Schätzung einer Position und/oder Zeitangabe aufgrund des Suchergebnisses sowie die Bereitstellung der geschätzten Position und/oder Zeitangabe zur Weiterverarbeitung.

3. Verfahren nach Anspruch 1 oder 2, bei dem die Zellen des Suchraums, die einer statistisch häufigen Kombination aus einem GNSS-Satelliten und einem Doppler-Verschiebungsbereich zugeordnet sind, von einem entfernten Rechenzentrum über eine Kommunikationsverbindung erhalten werden.

4. Verfahren nach Anspruch 1 oder 2, bei dem die statistischen Häufigkeiten für Kombinationen aus GNSS-Satellit und Doppler-Verschiebungsbereich von einem entfernten Rechenzentrum über eine Kommunikationsverbindung erhalten werden.

5. Verfahren nach Anspruch 1, bei dem die statistischen Häufigkeiten für Kombinationen aus GNSS-Satellit und Doppler-Verschiebungsbereich mithilfe von Entsprechungstabellen und/oder eines mathematischen Modells erhalten werden.

6. Verfahren nach irgendeinem der Ansprüche 1 bis 5, bei dem nach Erfassen eines ersten GNSS-Signals weitere GNSS-Signale erfasst werden, gegebenenfalls nach einer Beschränkung der Suche auf Zellen, die einer Kombination aus einem GNSS-Satelliten und einem Doppler-Verschiebungsbereich zugeordnet sind, welche infolge der Erfassung des ersten GNSS-Signals eine erhöhte statistische Wahrscheinlichkeit aufweist.

7. Verfahren nach irgendeinem der Ansprüche 1 bis 5, bei dem nach Erfassen eines ersten GNSS-Signals eine grobe Schätzung einer Position und/oder Zeitangabe auf der Grundlage des ersten GNSS-Signals und der Bahnebene des Satelliten, der das Satellitenpositionsbestimmungssystem benutzt, durchgeführt wird und diese grobe Schätzung zur gezielten Suche nach weiteren GNSS-Signalen herangezogen wird.

8. GNSS-Empfänger für einen Satelliten eines Satellitenpositionsbestimmungssystems, welcher Empfänger für die Durchführung eines Verfahrens zur Erfassung von GNSS-Signalen nach irgendeinem der Ansprüche 1 bis 7 ausgestaltet ist.

9. Computerprogramm für einen an Bord eines Satelliten, der ein Satellitenpositionsbestimmungssystem benutzt, mitgeführten GNSS-Empfänger, welches Programm von dem GNSS-Empfänger ausführbare Befehle enthält, wobei die Befehle bei Ausführung durch den Empfänger die Durchführung eines Verfahrens zur Erfassung von GNSS-Signalen nach irgendeinem der Ansprüche 1 bis 7 bewirken.

**Claims**

1. A method for acquiring GNSS signals, intended to be implemented on a satellite using a satellite positioning system, comprising searching for at least one among a plurality of GNSS signals originating from different GNSS satellites, said search being executed by cells in a search space, each cell being associated with a GNSS satellite, a code delay range and a Doppler shift range;
and in which said search is restricted, at least in a first stage of implementation of the method, to search space cells associated with a combination of a GNSS satellite and a Doppler shift range which is statistically frequent as a function of the orbital plane of the user satellite of the satellite positioning system;
the method being **characterised in that** it comprises a *priori* computation of the statistical frequencies for GNSS satellite and Doppler shift range combinations, on the basis of parameters of the orbital plane of the satellite using the satellite positioning system and orbital plane parameters of the GNSS satellites, and comprises determination of the search space cells associated with a statistically frequent combination of a GNSS satellite and a Doppler shift range.

2. A method according to claim 1, furthermore comprising at least rough estimation of a position and/or date on the basis of a result from said search and provision of the estimated position and/or date for further processing.

3. A method according to claim 1 or 2, in which the search space cells associated with a statistically frequent combination of a GNSS satellite and a Doppler shift range are obtained from a remote computing centre via a communication link.

4. A method according to claim 1 or 2, in which statistical frequencies for GNSS satellite and Doppler shift range combinations are obtained from a remote computing centre via a communication link.

5. A method according to claim 1, in which the statistical frequencies for GNSS satellite and Doppler shift range combinations are computed with the assistance of look-up tables and/or a mathematical model.

6. A method according to any one of claims 1 to 5, in which, after acquisition of a first GNSS signal, other GNSS signals are acquired, this optionally proceeding once the search has been restricted to cells associated with a combination of a GNSS satellite and a Doppler shift range having a greater statistical probability following the acquisition of said first GNSS signal.

7. A method according to any one of claims 1 to 5, in which, after acquisition of a first GNSS signal, a rough estimate of a position and/or date is performed on the basis of said first GNSS signal and the orbital plane of the satellite using the satellite positioning system, and in which said rough estimate is used for targeted searching for other GNSS signals.

8. A GNSS receiver for a user satellite of a satellite positioning system configured to implement a GNSS signal acquisition method according to any one of claims 1 to 7.

9. A computer program for a GNSS receiver intended to be installed on a satellite using a satellite positioning system, comprising instructions executable by the GNSS receiver, said instructions resulting, when executed by the receiver, in the implementation of a method for acquiring GNSS signals according to any one of claims 1 to 7.

**Fig. 1**

**Fig. 2**

Classes de décalage Doppler [m/s]

**Fig. 3**

N° de code
(N° de satellite
GNSS)

Retard de code

Décalage Doppler

28

30

32

34

$I_C$

$I_D$

**Fig. 4**

Paramètres des plans orbitaux *42*   *44* Paramètres de plan orbital du satellite
de la constellation GNSS             utilisateur

| | | |
|---|---|---|
| Correction de la dérive RAAN des satellites GNSS *46 a* | Date actuelle *46b* | Correction de la dérive RAAN du satellite utilisateur |

*46*

Calcul des probabilités de cooccurrence  *48*

Sélection des combinaisons de satellite GNSS et de décalage Doppler  *50*

Exécution de la recherche dans l'espace de recherche restreint  *52*

Détection de 4 signaux GNSS  *54*

*40*

Détermination précise de position et de datation  *56*

**Fig. 5**

Classes de décalage Doppler [m/s]

**Fig. 6**

N° de code
(N° de satellite
GNSS)

Retard de code

Décalage Doppler

**Fig. 7**

Temps [s]

**Fig. 8**

Paramètres des plans orbitaux ← 42     44 → Paramètres de plan orbital du
de la constellation GNSS       satellite utilisateur

Correction de la dérive RAAN des satellites GNSS — 46a'

Date actuelle    46b' — Correction de la dérive RAAN du satellite utilisateur

Calcul des probabilités de cooccurrence ~ 48'    46'

Sélection des combinaisons de satellite GNSS et de décalage Doppler et Recherche dans l'espace de recherche restreint ~ 50'

Détection du 1er signal GNSS ~ 51'

Calcul des probabilités de cooccurrence avec prise en compte du 1er signal GNSS et de son décalage Doppler ~ 52'

Détection d'un autre signal GNSS ~ 53'

Calcul des probabilités de cooccurrence avec prise en compte des signaux GNSS déjà détectés et de leur décalage Doppler respectif ~ 54'   55'   40'

Sélection des combinaisons de satellite GNSS et de décalage Doppler et Recherche dans l'espace de recherche restreint

4 signaux acquis?   non

oui   56'

Détermination précise de position et de datation

**Fig. 9**

Paramètres des plans orbitaux
de la constellation GNSS  ~ 42

44  Paramètres de plan orbital du satellite
utilisateur

| Correction de la dérive RAAN des satellites GNSS | ~ 46a" | Date actuelle | 46b" | Correction de la dérive RAAN du satellite utilisateur |
|---|---|---|---|---|

~ 46"

Calcul des probabilités de cooccurrence  ~ 48"

Sélection des combinaisons de satellite GNSS et de décalage Doppler  ~ 50"

Exécution de la recherche dans l'espace de recherche restreint  ~ 50a"

Détection du 1er signal GNSS  ~ 51"

Estimation grossière de position et de datation  ~ 52"

40"

Détermination des satellites GNSS visibles et décalages Doppler associés  ~ 53"

Recherche ciblée des signaux GNSS des satellites GNSS visibles  ~ 54"

Détermination précise de position et de datation  ~ 56"

**Fig. 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6278404 B

**Littérature non-brevet citée dans la description**

- Différences between Signal Acquisition and Tracking. **DE L. WEILL ; M. PETOVELLO.** InsideGNSS. Janvier 2011
- Orbit détermination for the CanX-2 Nanosatellite using Intermittent GPS data. *GNSS 2010 - PROCEEDINGS OF THE 23RD INTERNATIONAL TECHNICAL MEETING OF THE SATELLITE DIVISION OF THE INSTITUE OF NAVIGATION (ION GNSS 2010), 8551 RIXLEW LANE SUITE 360 MANASSAS, VA 201,09, USA,* 24 Septembre 2010, 2117-2125
- **D'ARIEN LEONARD.** Impact of GPS and Galileo Orbital Plane Drifts on Interoperability Performance Parameters. *Proceedings of GNSS,* 2003